# EUROPEAN PATENT APPLICATION

(11) **EP 2 491 780 A1**
(43) Date of publication of application: **29.08.2012**
(21) Application number: 09850595.1
(22) Date of filing: 23.10.2009
(51) Int. Cl.: A01D 34/68, F16D 3/74, F16F 15/134

(54) **VIBRATION ABSORBING MECHANISM AND WORKING MACHINE WITH SAME**

(71) Applicant: Husqvarna Zenoah Co., Ltd., Kawagoe-shi Saitama 350-1165 (JP); Fine Steel Engineering Co., Ltd., Kanagawa 222-0033 (JP)
(72) Inventor: ONO Ryou, Kawagoe-shi Saitama 350-1165 (JP); UCHIDA, Teruo, Yokohama-shi Kanagawa 222-0033 (JP); IMAIZUMI Toshiaki, Yokohama-shi Kanagawa 222-0033 (JP)
(74) Representative: Valea AB
(86) International application number: PCT/JP2009/068264
(87) International publication number: WO 2011/048697

(57) **Abstract**

A mower (1) wherein a vibration absorbing mechanism (3) is provided in the transmission route of a driving force from a drive source such as an engine. The vibration absorbing mechanism (3) comprises a shaft-like joint (10), a tube-like joint (20) into which a part of the shaft-like joint (10) is rotatably inserted, a coiled spring (30) provided on the outer peripheral side of the tube-like joint (20) and disposed between spring seats (14, 25) provided to the joints (10, 20), and a rotation restricting means for restricting the amount of rotation of the coiled spring (30). The spring seats (10, 20) are provided with engaging steps (18, 28) engaged with the ends (31, 32) of the coiled spring (30) in the direction in which the coiled spring (30) is expanded in diameter. The rotation restricting means is constructed from ridges (16) on the shaft-like joint (10) side and from grooves on the tube-like joint (20) side, said grooves receiving the ridges (16). The outer wall surfaces of the ridges (16) are made to be in surface contact with the inner wall surfaces of the grooves.

## Description

### Field of the Invention

The present invention relates to a vibration absorbing mechanism and a working machine with the same.

### Background of the Invention

Conventionally, in working machines such as portable mowers, etc., torsional vibrations are caused at the transmission shaft by irregular combustion of the engine, torque variation upon accelerating and decelerating, variation of revolutions, or variation of the load acting on the mower blade.
As a solution to such a problem, it is known to provide a vibration absorbing joint at the location where the rotation of the output shaft of the engine is transmitted to the transmission shaft through a torsion coiled spring such that the torsional vibration of the transmission shaft is absorbed by the torsion coiled spring (e.g., Patent Document 1). In the structure of this vibration absorbing joint, a rotation restricting means is further provided such that the coiled spring is not twisted at a predetermined angle or more to the press fitted portion of a movable sleeve and a tube-like connected body.

### Prior art document

### Patent document

Patent Document 1: Japanese Patent Publication No. 4167679

### Summary

### Problem to be Solved by the Invention

However, with the vibration absorbing joint of the mower described in Patent Document 1, there is a problem in that the structure becomes complex due to the need to form a long hole on the movable sleeve for the insertion of a pin for rotation restricting, bending the ends of the coiled spring such that the coiled spring engages the movable sleeve and the spring receiving member, etc.
Moreover, when rotation restricting acts in Patent Document 1, the pin is abutted with the inner periphery of the long hole for rotation restricting; however, the contact of the pin and the inner periphery of the long hole is almost linear and the pressure of the surface when abutting increases, resulting in significant abrasion between the pin and the long hole. There is a problem in that particularly as the abrasion of the long hole increases, the amount of rotations increases, causing the coiled spring to be twisted by more than the predetermined angle and eventually break.

The purpose of the present invention is to provide a vibration absorbing mechanism which can reliably absorb vibrations with a simple structure while increasing the durability, in addition to a working machine with the same.

### Means of Solving the Problem

The vibration absorbing mechanism according to the present invention is a vibration absorbing mechanism provided in a transmission route of a driving force from a drive source, characterized in that said vibration absorbing mechanism comprises: a shaft-like joint provided on one side of either an input side or an output side of said driving force, a tube-like joint which is provided on the other side, and into which a part of said shaft-like joint is rotatably inserted, a coiled spring inserted into the outer peripheral side of said tube-like joint and disposed between spring seats provided to the joints, and a rotation restricting means for restricting the amount of relative rotation between said shaft-like joint and said tube-like joint, wherein said spring seats are provided with engaging steps engaged with the ends of a spirally coiled spring in the direction in which the external coiled spring is expanded in diameter at the time of transmission of said driving force, wherein said rotation restricting means is constructed from ridges provided on the outer periphery of said shaft-like joint in the axial direction and from grooves in which said ridges are rotatably received at a predetermined angle in the circumferential direction.

In the vibration absorbing mechanism according to the present invention, the total contact area of said ridges and said grooves is preferably 30mm² or more.

The working machine according to the present invention is characterized in comprising the above described vibration absorbing mechanism.
As a working machine here, besides a mower, it may be a hand-held edger, a long reach trimmer, a short reach trimmer, a pole saw, etc.

### Effects of the Invention

According to the present invention, when a rotation delay is caused by torsional vibrations, etc. at or after the joint on the output side of the driving force relative to the joint which is either one of a shaft joint or a tube-like joint provided on the input side, the torsional vibration is absorbed by expanding a coiled spring. Accordingly, the base end of the coiled spring may be pressed with an engaging step of the joint on the input side to absorb the vibrations while transmitting the driving force; therefore, the structure can be simplified such as by using the winding shape of the coiled spring as is.

Also, the rotation restricting means is constructed by ridges and grooves, with the range of rotation of the ridges and grooves with respect to one another restricted by abutting the opposing surfaces of said ridges and grooves, thereby reducing the pressure of the surface when abutting in addition to greatly preventing abrasion. Consequently, since abrasion is unlikely to occur, the range of rotation in the ridges and grooves can remain constant over a long time period and breakage of the coiled spring can be successfully prevented due to less possibility of the coiled spring over-expanding, thereby improving reliability and durability.

Also, by setting the total contact area of ridges and grooves to 30mm² or more, the pressure of the surface of the abutting portion can be reduced and significant improvement of durability can be reliably realized.

### Brief Description of the Drawings

[Fig. 1] This is a cross-sectional view illustrating the main part of a mower according to the first embodiment of the present invention.
[Fig. 2] This is an exploded perspective view of the junction of an output shaft and a transmission shaft.
[Fig. 3] This is a cross-sectional view of III-III in Figure 2.
[Fig. 4] This is a cross-sectional view illustrating the main part of a mower according to the second embodiment of the present invention.
[Fig. 5] This is a cross-sectional view illustrating a modification of the present invention.
[Fig. 6] This is a cross-sectional view illustrating another modification of the present invention.

### Description of the embodiments

### [First embodiment]

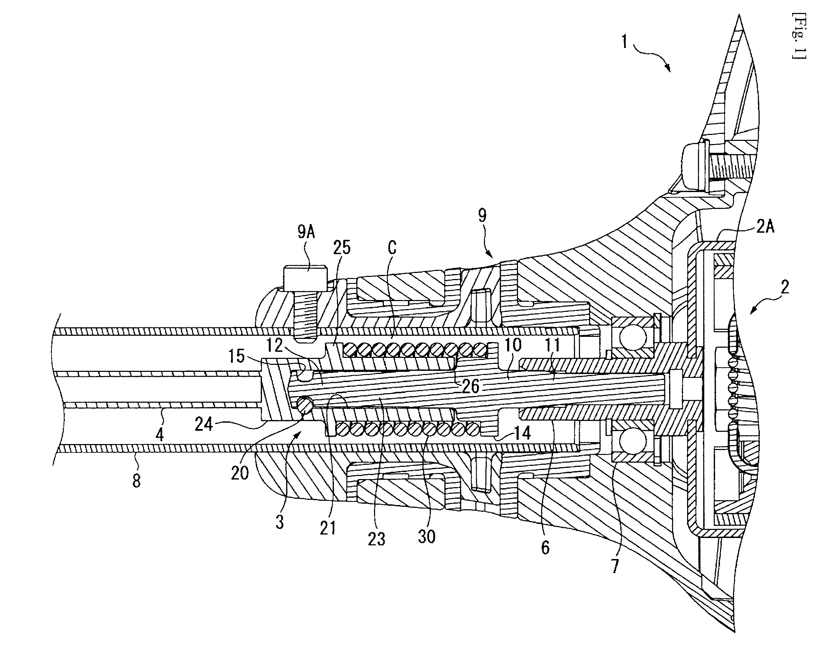

In a mower 1 in Figure 1, a driving force of an engine as a drive source (not shown) is transmitted to a mower blade via a drive section of a working machine (not shown), in which a centrifugal clutch 2, a vibration absorbing mechanism 3, a hollow shaft 4, and a hollow shaft 4 are splined to the drive section. Since other configurations of the mower 1 are similar to those commonly used and are known, illustrations and descriptions of other configurations of the mower 1 have been omitted below.

In a housing 2A on the driven side of the centrifugal clutch 2, a tube-like output shaft 6 is provided, wherein, supported by a bearing 7, the output shaft 6 rotates integrally with the housing 2A. The distal end of the output shaft 6 is located on the base end side of a pipe 8 which extends to the drive section side of the working machine. The base end side of the pipe 8 is inserted into a pipe holding portion 9 which is constructed from a plurality of resin members or metal members and retained fixed by a screw 9A.

The vibration absorbing mechanism 3 comprises a shaft-like joint 10 with a base end side splined within the output shaft 6 to rotate integrally, a tube-like joint 20 into which the apical side of the shaft-like joint 10 is rotatably inserted, and a coiled spring 30 provided on the outer periphery of the tube-like joint 20. Said hollow shaft 4 is adhesion-fixed to the apical surface of the tube-like joint 20.

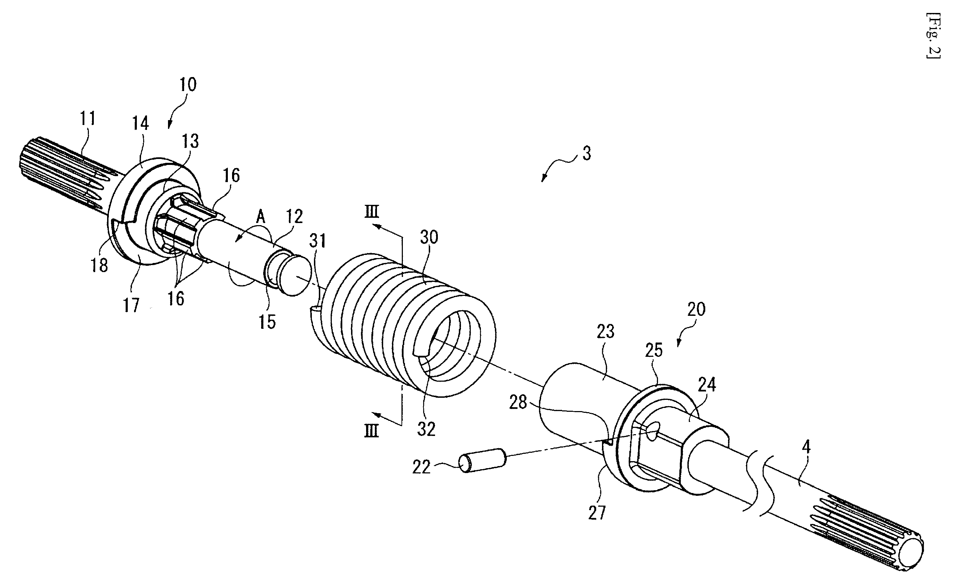

As illustrated in Figure 2, the base end side and the apical side of the shaft-like joint 10 are a joint site 11 at which the spline is engraved and an insertion portion 12 which is inserted into the tube-like joint 20, respectively. An annular spring seat 14 is provided in a major diameter portion 13 between the joint site 11 and the insertion portion 12.

A series of grooves 15 in the circumferential direction are provided at the distal end of the insertion portion 12 in a state such that the insertion portion 12 is inserted into an insertion hole 21 of the tube-like joint 20 and a fixing pin 22 which is inserted in the radial direction with respect to the tube-like joint 20 is engaged to the grooves 15, thereby retain fixing the shaft-like joint 10. On the other hand, on the outer periphery of the base end (i.e., spring seat 14 side) of the insertion portion 12, five ridges 16 of a predetermined length in the axial direction, a predetermined height in the radial direction, and a predetermined width in the circumferential direction are provided at equal circumferential distances.

In the spring seat 14, an opposing surface 17 which is in a spiral form is provided opposing the coiled spring 30 and mid-way in the circumferential direction of the opposing surface 17, an engaging step 18 to which the base end 31 of the coiled spring 30 is engaged. When a driving force from an engine is transmitted to the shaft-like joint 10 and the shaft-like joint 10 rotates toward a rotation direction A side in Figure 2, the engaging step 18 is abutted to the base end 31 of the coiled spring 30 to rotate the coiled spring 30 by pressing in a press-expanding direction.

On the other hand, the base end side of the tube-like joint 20 is a guide portion 23 located within the coiled spring 30 and the apical side of the tube-like joint 20 is a width-across-flat portion 24. An annular spring seat 25 is also provided between the guide portion 23 and the double-sided width portion 24. In the guide portion 23, an insertion opening 26 for the insertion hole 21 is provided and the insertion portion 12 of the shaft-like joint 10 is inserted into the insertion hole 21 until the edge of the insertion opening 26 is adjacent to the major diameter portion 13 of the shaft-like joint 10 (see Figure 1).

Also in the spring seat 25, an opposing surface 27 which is in a spiral form is provided opposing the coiled spring 30, and mid-way in the circumferential direction of the opposing surface 27, there is an engaging step 28 to which an apical portion 32 of the coiled spring 30 is engaged. In the state in which the insertion portion 12 is inserted into the guide portion 23, each of spring seats 14, 25 of the shaft-like joint 10 and the tube-like joint 20 are spaced at a predetermined interval, while the coiled spring 30 is inserted between the spring seats 14 and 25 in a free state.

Thus, for the driving force from the engine which has been transmitted from the shaft-like joint 10 to the coiled spring 30, an apical portion 32 of the coiled spring 30 is engaged to the engaging step 28 of the spring seat 25 to press the tube-like joint 20, thereby transmitting the power output to the tube-like joint 20. Additionally, the engine power output is transmitted to the drive section of the working machine from a hollow shaft 4 to drive a mower blade.

In this regard, if the rotation of the tube-like joint 20 side is delayed relative to the shaft-like joint 10 side by torsional vibrations occurring on the hollow shaft 4 due to torque variation, variation of revolutions, load variation, etc., the shaft-like joint 10 press-expands the coiled spring 30 against a spring force, expanding the coiled spring 30 and thereby reliably absorbing the vibrations.

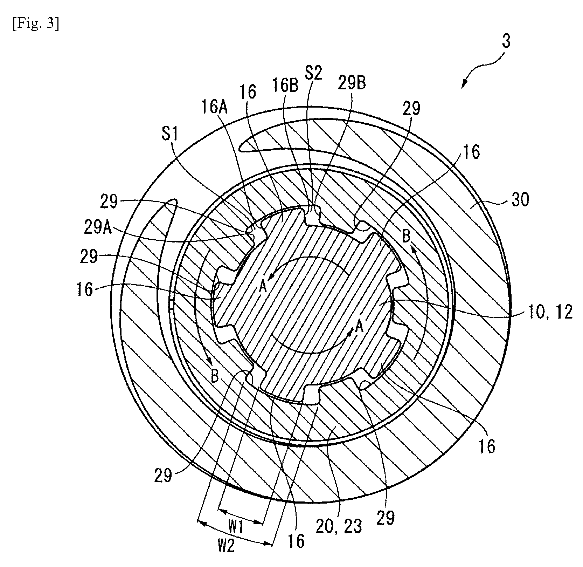

As illustrated in an enlarged view in Figure 3, in the inner periphery of the tube-like joint 20, grooves 29 corresponding to ridges 16 of the shaft-like joint 10 are provided, with the ridges 16 rotatably received in the grooves 29 at a predetermined angle. The width size W2 in the circumferential direction of the grooves 29 is about twice the width size W1 of the ridges 16. When the coiled spring 30 is inserted through each of the spring seats 14, 25 in a free state, each of the engaging steps 18, 28 of the spring seats 14, 25 is in a state such that they are in contact or almost in contact with each of the ends 31, 32. Regarding each of the joints 10, 20, they are in a positional relationship such that the ridges 16 are located in the center widthwise of the grooves 29.

As described above, since the coiled spring 30 is press-expanded when the rotation of the tube-like joint 20 side is delayed relative to the shaft-like joint 10 side, while both joints 10, 20 rotate together, with respect to the tube-like joint 20, the shaft-like joint 10 travels toward the rotation direction A side and rotates, thereby filling up one space S 1 between the ridges 16 and grooves 29 in the rotation direction A side.

As the difference in rotational speed between the joints 10, 20 sides significantly increases, eventually the outer wall surfaces 16A, which are those in the axial direction of the ridges 16, are abutted in a predetermined area to the inner wall surfaces 29A of grooves 29 opposing the outer wall surfaces 16A to restrict the progress of the rotation, such that the coiled spring 30 is prevented from being expanded by a predetermined angle or more. In other words, a rotation restricting means which restricts the relative amount of rotation of the shaft-like joint 10 and tube-like joint 20 with respect to one another is constructed by these ridges 16 and grooves 29.

Here, the area of approximately the sum of each of the outer wall surfaces 16A, that is, the total contacting area of the ridges 16 and grooves 29, is preferably 30mm² or more and more preferably 48mm² or more, taking into account the creation of the pressure of the surfaces when abutting is sufficiently small based on the greatness of the torsional vibration which occurs in a typical common mower. If less than 30mm², the pressure of the surface between the outer wall surface 16A and inner wall surface 29A becomes too high due to the rotating torque of the shaft-like joint 10 side and a significant increase in durability may not be expected.

Additionally, although the diameter size of the coiled spring 30 is expanded when the coiled spring 30 is press-expanded, a void C, at a degree such that the coiled spring 30 does not contact the inner periphery of the pipe 8 even if the coiled spring 30 is maximally expanded, is formed between the coiled spring 30 and the pipe 8 as illustrated in Figure 1.

Incidentally, in cases such as when an engine is suddenly stopped from a high revolution range in a state in which the load on the mower blade is removed, the rotation of the tube-like joint 20 side is maintained by the inertial force of the mower blade after the centrifugal clutch 2 is disrupted, resulting in the phenomenon of the tube-like joint 20 being dragged around the shaft-like join 10 side. In such a case, in the present embodiment, the tube-like joint 20 travels in the rotation direction B side and rotates with respect to the shaft-like joint 10, to fill up the other space S2 between the ridges 16 and grooves 29 toward the rotation direction B side.

However, in such a case, for the rotation of the tube-like joint 20, no drag by the coiled spring 30 is generated when the space S2 is filled up since the spring seat 25 travels in a direction away from the apical portion 32 of the coiled spring 30, and the other inner wall surface 29B along the axial direction of the grooves 29 is abutted immediately to the other outer wall surface 16B of the ridges 16 opposing the inner wall surface 29B. Consequently, even in the event that the rotation of the tube-like joint 20 side becomes greater than the rotation of the shaft-like joint 10 side, the coiled spring 30 is not over-twisted (is not twisted at all in the present embodiment) to the diameter reduction side, thereby successfully maintaining durability of the coiled spring 30.

According to the above described present embodiment, when torsional vibrations occur on the tube-like joint 20 side and the rotation of the tube-like joint 20 is delayed, the torsional vibrations are absorbed by expanding the coiled spring 30, and the base end 31 of the coiled spring 30 may be pressed with the engaging step 18 of the shaft-like joint 10 to transmit the engine power output, thereby simplifying the structure such as by using the winding shape of the coiled spring as is.

Also, since the rotation of each of the joints 10, 20 is restricted by abutting each surface of the outer wall surfaces 16A, 16B of the ridges 16 and the inner wall surfaces 29A, 29B of the grooves 29, the pressure of the surface when abutting can be reduced and the abrasion can be greatly prevented. Consequently, since abrasion is unlikely to occur, the range of rotation in the ridges 16 and grooves 29 remains constant over a long time period, successfully preventing breakage of the coiled spring due to less possibility of the coiled spring 30 over-expanding and improving reliability and durability.

### [Second embodiment]

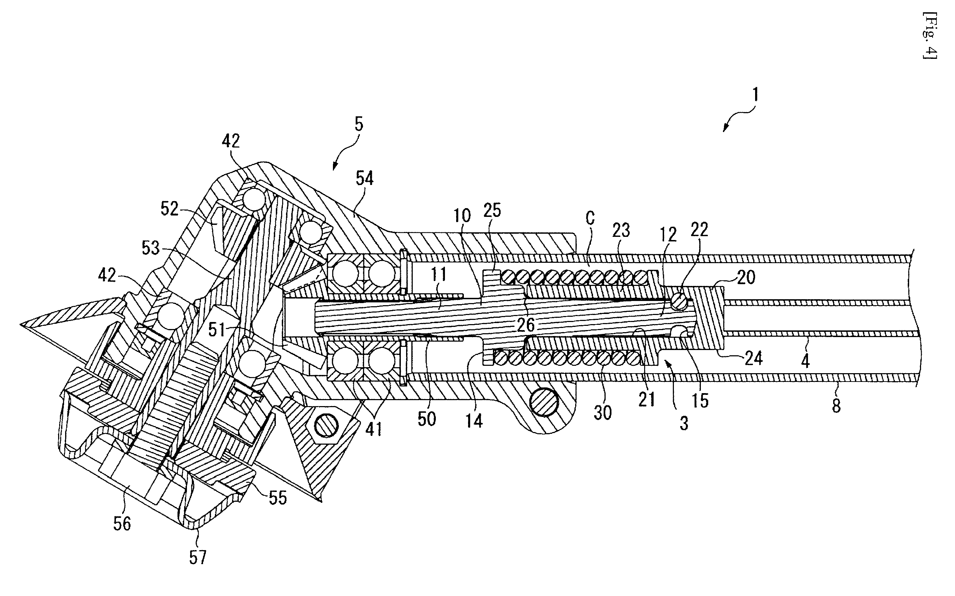

In Figure 4, a second embodiment of the present invention is illustrated. In the present invention, a vibration absorbing mechanism 3 similar to the one described in the first embodiment is provided on the drive section 5 side of a working machine instead of the engine side. In this vibration absorbing mechanism 3, the drive force from an engine is input to a tube-like joint 20 first and transmitted to a shaft-like joint 10 via a coiled spring 30 which is to be press-expanded. Consequently, also in the present embodiment, when the rotation of the shaft-like joint 10 side is delayed relative to the tube-like joint 20 side, vibrations caused by the delay can be reliably absorbed by the coiled spring 30.

Moreover, the drive section 5 of a working machine in the present embodiment comprises: an input shaft 50 to which a shaft-like joint 10 is splined, further comprising a bevel gear 51 which is supported by a pair of bearings 41, an another bevel gear 52 which meshes with the bevel gear 51, a mounting shaft 53 supported by a pair of bearings 42 which is inserted into the bevel gear 52 to rotate integrally and arranged with an interval, a gear case 54 to accommodate these parts, a discoid mounting seat 55 which is mounted at the distal end of the mounting shaft 53, and a fixing cap 57 which clamp fixes a mower blade between the fixing cap 57 and said mounting seat 55 with a bolt 56 threaded to the mounting shaft. Since other configurations of the drive section 5 of a working machine are similar to those of commonly used mowers and are known, further description is omitted here.

In addition, the present invention is not limited to the configurations described in the above first and second embodiments, with modifications that are within the scope in which the objects of the present invention are achieved included in the present invention.
For example, although the vibration absorbing mechanism 3 has been provided on the engine side in said first embodiment and has been provided on the drive section 5 side of a working machine in the second embodiment, such vibration absorbing mechanism (s) 3 may be provided on both the engine side and drive section 5 side of a working machine or one of these may be provided near the center lengthwise of the hollow shaft 4. In other words, the vibration absorbing mechanism may be provided within the transmission route of the driving force from the drive source such as an engine, etc.

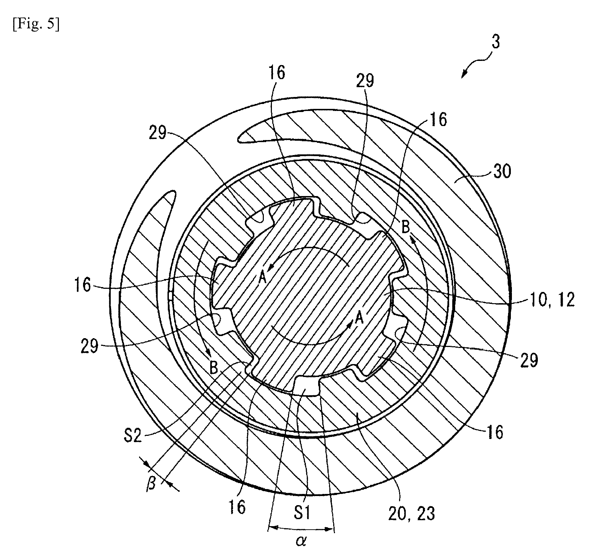

In said first embodiment, the positional relationship between each of the joints 10, 20 has been set such that the ridges 16 are located at the center widthwise of the grooves 29; however, the positional relationship may be set such that the space S1 is larger than the space S2 already when the coiled spring 30 is still in a free state by making an angle α larger than an angle β as illustrated in Figure 5. In such a case, elastic deformation of the coiled spring 30 can be effectively used, absorbing a greater range of vibrations.

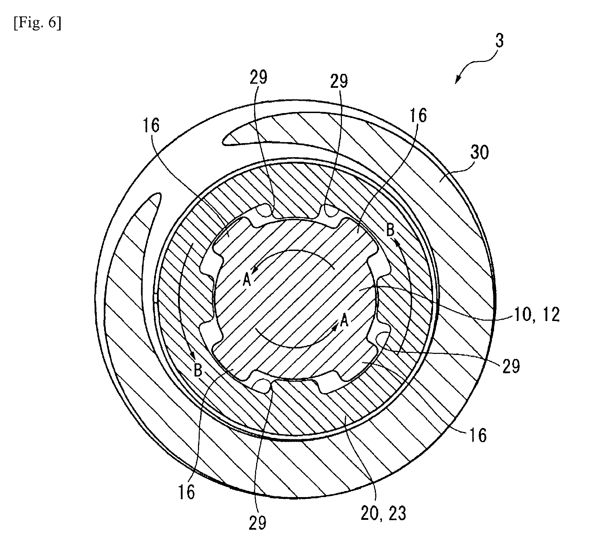

In said first embodiment, the ridges 16 and grooves 29 have been provided in five locations respectively; however, they may be provided in four locations as illustrated in Figure 6. That is to say, the number of locations of the ridges 16 and grooves 29 can be determined to be any number which does not cause a problem in strength, so the number may naturally be other than five or four locations such as three locations or less and six locations or more.

### Industrial Applicability

The vibration absorbing mechanism of the present invention is not limited to an engine-driven mower and is applicable for mowers driven by electric motors or any other working machines.

**Explanation of the Symbols**

[0038] 1···mower as working machine, 3···vibration absorbing mechanism, 10···shaft-like joint, 14,25···spring seat, 16···ridges, 18,28···engaging step, 20···tube-like joint, 29···grooves,30···coiled spring.

## Claims

1. A vibration absorbing mechanism provided in a transmission route of a driving force from a drive source, **characterized in that** said vibration absorbing mechanism comprises;
a shaft-like joint provided on one side of either an input side or an output side of said driving force,
a tube-like joint which is provided on the other side, and into which a part of said shaft-like joint is rotatably inserted,
a coiled spring inserted into the outer peripheral side of said tube-like joint and disposed between spring seats provided to the joints, and
a rotation restricting means for restricting the amount of relative rotation between said shaft-like joint and said tube-like joint,
wherein said spring seats are provided with engaging steps engaged with the ends of the coiled spring which is in a spiral form, in the direction in which the external coiled spring is expanded in diameter at the time of transmission of said driving force, and
wherein said rotation restricting means is constructed from ridges provided on the outer periphery of said shaft-like joint in the axial direction and from grooves in which said ridges are rotatably received at a predetermined angle in the circumferential direction.

2. A vibration absorbing mechanism according to claim 1, **characterized in that** the total contact area of said ridges and said grooves is 30mm² or more in the vibration absorbing mechanism.

3. A working machine, **characterized in that** said working machine comprises a vibration absorbing mechanism according to claim 1 or 2.
